# EUROPEAN PATENT APPLICATION

(11) **EP 1 424 696 A2**
(43) Date of publication of application: **02.06.2004**
(21) Application number: 03027328.8
(22) Date of filing: 26.11.2003
(51) Int. Cl.: G11B 27/36

(54) **Information recording and playback apparatus**

(30) Priority: 29.11.2002 JP 2002347508
(71) Applicant: Kabushiki Kaisha Toshiba, Tokyo (JP)
(72) Inventor: Suda, Hajime, 1-1, Shibaura 1-chome, Minato-ku Tokyo 105-8001 (JP)
(74) Representative: Henkel, Feiler & Hänzel

(57) **Abstract**

A mail containing recording conditions is transmitted by a portable terminal (201), and a recording and playback apparatus (1) receives the mail from a server (299). Thereby, a recording programming, that is, a recording start and recording end of information, can be set in the recording and playback apparatus, even when the recording programming cannot be set on the recording and playback apparatus by using an apparatus main body or a remote control device.

## Description

This invention relates to an information recording and playback apparatus which can record and play back information. In particular, it relates to an information recording and playback apparatus, wherein start and end of information recording can be set from outside.

In information recording and playback apparatuses which play back or record an information medium storing video data, such as image information, and control information, the following are set with the apparatus main body or an accompanying remote control device: recording start date and time/recording end date and time; recording source; and recording rate and recording system (sound recording system/presence and absence of simulcast), etc (hereinafter simply referred to as "recording programming"). Thereby, a desired (preselected) recording source is recorded on the preselected date and time, with the predetermined recording rate and recording system.

Nowadays, information recording and playback apparatuses are in practical use, which can reduce an amount of the information to be inputted with the apparatus main body or a remote control device. In such apparatuses, a recording programming code called "G code" is inputted instead of predetermined data determined by broadcasters, such as recording (broadcasting) start date and time/recording (broadcasting) end date and time and recording source, in the data used for recording programming.

Further, Jpn. Pat. Appln. KOKAI Pub. No. 8-306097 discloses a remote control device, which has an extension setting section and can extend the recording end time by 15 minutes for each operation of the extension setting section, in such a case where the broadcasting time of the program being recorded has been extended and its end time has been changed, or it has been found before start of recording that wrong recording end time was inputted.

However, these techniques have a problem that the user cannot change the input recording programming information or add a new recording programming, if the user cannot return from a position distant from the information recording and playback apparatus, or if the user is out, after recording programming.

The object of the present invention is to provide an information recording and playback apparatus, which can set start and end of recording even under conditions where recording programming with the apparatus main body or a remote control device is difficult.

According to an aspect of the present invention, there is provided an information recording and playback apparatus which records or plays back information, comprising: receive means for receiving a recording programming mail from the outside, the recording programming mail containing programming contents; and entering means for entering a recording programming in accordance with the programming contents obtained by the receive means.

According to another aspect of the present invention, there is provided an information recording and playback apparatus comprising: an information recording and playback section which records information in a recording medium, and plays back information prerecorded in a recording medium; a timer section which operates the information recording and playback section at a predetermined operation starting time, and stops the information recording and playback section at a predetermined operation ending time; a memory section which holds operation information of the timer section; a communications control section which inputs and sets at least the operation starting time and the operation ending time in the timer section from the outside; and entering means for entering, in the memory section, a recording programming including at least the operation starting time and the operation ending time obtained through the communications control section.

According to sill another aspect of the present invention, there is provided a method of controlling an information recording and playback apparatus, the method comprising: receiving a mail from outside; judging whether the received mail contains recording control information including at least an operation starting time and an operation ending time; judging whether a recording programming is acceptable with the operating starting time and the operating ending time included in the mail judged to be a mail containing the recording control information; and storing, in a memory section, the operation starting time and the operation ending time included in the recording control information contained in the mail whose recording programming has been judged acceptable, the operation starting time and the operation ending time serving as information used for controlling a timer section, the timer section operating and stopping an information recording and playback section at the operation starting time and the operation ending time, respectively.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram showing an example of a recording and playback apparatus to which an embodiment of the present invention is applicable;
FIG. 2 is a schematic diagram showing an example of arrival of mails on the recording and playback apparatus shown in FIG. 1, and transmission and reception of mails between a mail server and a portable terminal;
FIG. 3 is a flow chart showing an example of recording programming by an E-mail; and
FIG. 4 is a flow chart showing a procedure of entering a recording programming from an E-mail.

An embodiment of the present invention will now be described in detail with reference to drawings.

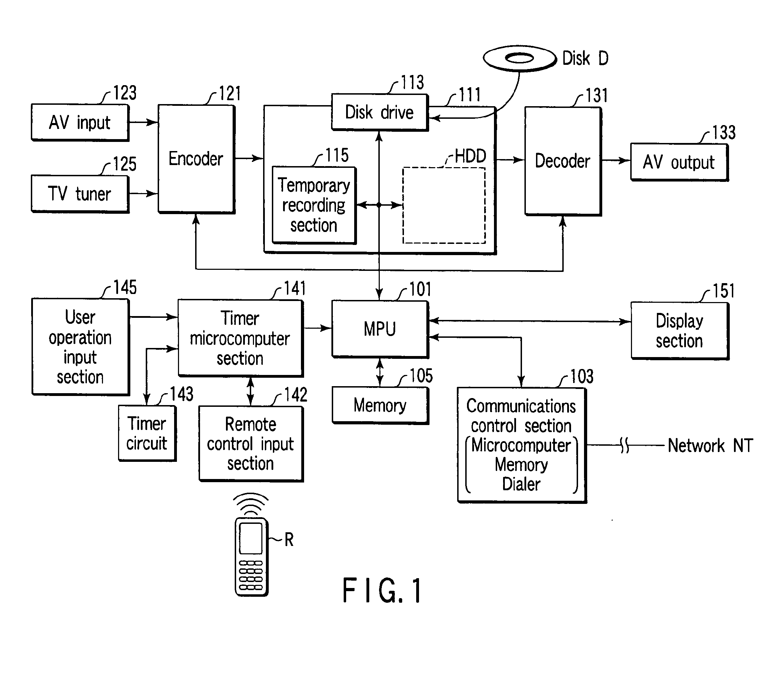

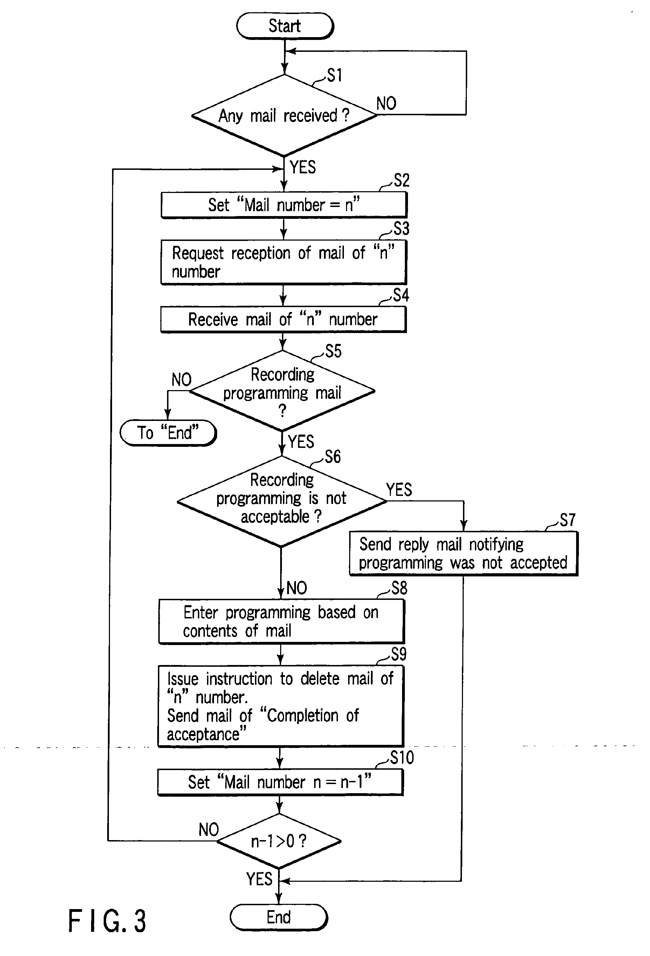

A recording and playback apparatus 1 shown in FIG. 1 includes an information recording and playback section 111 which can record input information in a predetermined recording medium and play back information stored already in a recording medium in response to a playback operation, and a microcomputer (MPU, that is, a main control unit) 101 which controls recording in, and playback from, the information recording and playback section 11, and operations of sections explained below.

The information recording and playback section 111 comprises a disk drive unit 113 which can record information in, and play back information from, a disk D manufactured in compliant with the DVD (Digital Versatile Disk) standard, and a temporary recording section 115 functioning as a buffer memory, which can temporarily hold a certain amount of data to be recorded in, or data reproduced from, a disk D set in the disk drive unit 113.

In the case where, for example, all the available memory of the disk D has been filled during recording, the temporary recording section 115 temporarily holds information to be recorded, until the disk D has been changed to a disk having an available memory area. In addition to the disk drive unit 113, a hard disk drive HDD may be provided, which is suitable for recording and retrieval (playback) of massive information.

The information recording and playback section 111 is connected with an encoder 121 which encodes input information into a form recordable by the information recording and playback section 111, and a decoder 131 which decodes information outputted from the information recording and playback section 111 into a form displayable by an output device described below.

The encoder 121 is connected with an AV (Audio Video) input section 123 to which recording information, being image information or the like, can be inputted from the outside, and a tuner section 125 which receives images and sounds distributed from information distributors, such as broadcasters.

The decoder 131 is connected with an AV (Audio Video) output section 133 which supplies playback information decoded (by the decoder 131) to an output device, typified by a playback equipment (television) and a monitor.

The MPU 101 is also connected with a timer microcomputer section 141. The timer microcomputer section 141 receives an input signal from the recording and playback apparatus 1, or from an accompanying remote control terminal (remote control device) R. The input signal includes recording programming information such as recording (broadcasting) start date and time/recording (broadcasting) end date and time; recording source; and recording rate and recording system (sound recording system), etc (hereinafter simply referred to as "recording programming").

Further, the timer microcomputer section 141 is connected with a remote control input section 142 which receives a control signal from the remote control device R, a timer circuit (clock unit) 143 which manages and playback apparatus 1, and a user operation input section 145 which receives an operation request (instructions) from the user.

The MPU 101 is also connected with a display section 151 which displays information inputted to the timer microcomputer section 141 or an operation state of the apparatus 1, a communications control section 103 which receives a recording programming from the outside and informs a designated destination whether the recording programming is acceptable or not, through a network NT, and a memory 105 which stores recording programming information and the like. Further, the communications control section 103 is provided with a memory (not shown) containing browser software (application software for enabling finding and browsing of information in a network) widely used in the network NT, a microcomputer (control unit, not shown), and a dialer which secures communications for transmitting mails to the outside under predetermined conditions.

The MPU 101 controls, recording, copying and deleting with respect to the disk D, and controls changes of operation of the recording and playback apparatus inputted to the timer microcomputer section 141 through the user operation input section 145, and display to the user with the display section 151, in accordance with a control program stored in the memory 105.

The timer microcomputer section 141 manages the recording programming information set by the user, while monitoring the timer circuit (clock unit) 143, and instructs the MPU 101 to start recording when the programmed recording starting time has come, and instruct the MPU 101 to end the recording when the programmed recording ending time has come.

The user operation input section 145 receives an operation request from the user, such as change of the operation of the recording and playback apparatus and reception of the recording programming information. The user operation input section 145 comprises a data receiving section which receives a control signal from the remote control device (remote control terminal) R, and a control signal input section (not shown) which outputs a control signal to the timer microcomputer section 141 in response to an instruction directly inputted by the user with an operation panel (not shown) of the main body of the apparatus 1.

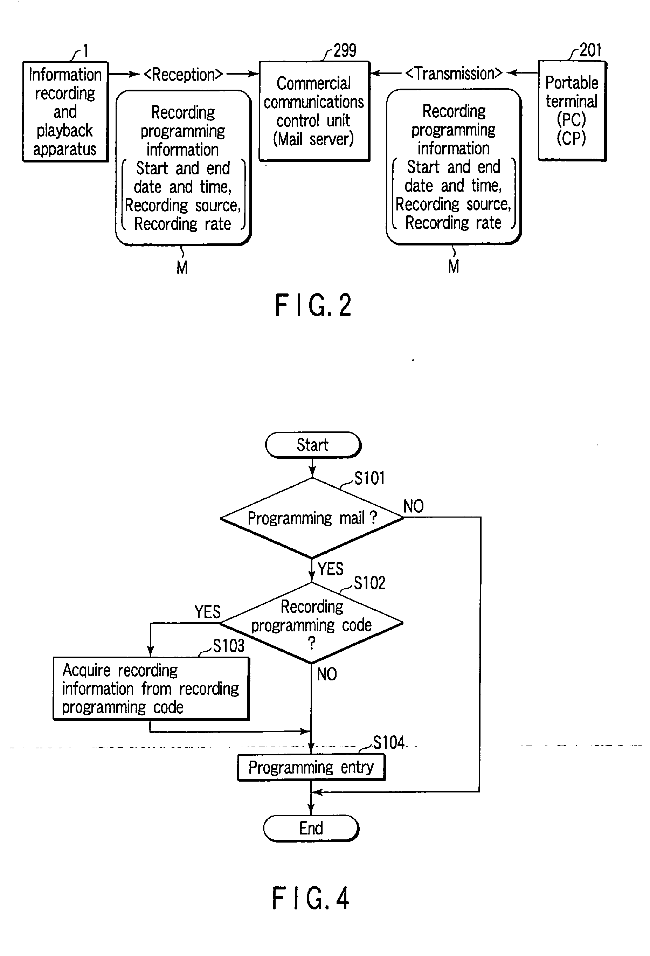

FIG. 2 is a schematic diagram showing an example of recording programming from outside on the recording and playback apparatus shown in FIG. 1.

As shown in FIG. 1, an existing communication apparatus (portable terminal) 201, represented by personal computers PC and cellular phones CP, transmits an E-mail (hereinafter simply referred to as "mail") M containing recording programming information from the user to a mail server (commercial communications control unit for network) 299. The recording and playback apparatus 1 distinguishes whether the body of the mail received from the mail server 299 contains a specific character string. If the mail contains the specific character string, the recording and playback apparatus 1 judges the character string to be programming information, and set a recording programming in the recording and the playback apparatus 1 itself.

FIG. 3 is a flow chart showing an example of reception of recording programming by a mail and a procedure of entering a recording programming.

First, the communications control section 103 of the information recording and playback apparatus 1 checks whether a predetermined mailbox of the predesignated mail server has a newly-received mail M or not (S1) .

When it is checked that at least one mail M has been received (S1-Yes), the number "the number of mails = n" is set in the memory 105 as the total number of the received mails (S2).

Next, a capture (reception) request for receiving the mail of "n" number is transmitted (S3), and the mail of "n" number is received from the mailbox (S4).

Then, it is judged whether the received mail is a recording programming mail or not (S5). If the mail is a recording programming mail (S5-Yes), it is judged whether recording programming is impossible or not, for example, the apparatus has already been programmed to record its maximum recordable programs (S6). If a new recording programming is inacceptable (S6-Yes), the apparatus sends a reply mail to notify that the programming by mail was not accepted (S7).

In step S6, if a recording programming is acceptable (56-No), the recording programming is additionally entered in a recording programming information table in the memory 105, in accordance with the contents of the mail (S8).

Thereafter, the apparatus issue an instruction to the mailbox to delete the mail of "n" number, and sends a mail which notifies the user that "end (completion of acceptance) of recording programming for the mail of n number" (S9). Simultaneously, or at a predetermined timing, the number of mails in the memory 105 is rewritten to "n = n-1" (S10).

Then, it is judged whether the number "n-1" in the memory 105 is greater than 0 or not (S11) and, in the case of n-1 > 0 (S11-Yes), the steps S3 to S9 are repeated. Thereby, capture of the rest of the mails, judgment as to whether each of the mails is a recording programming mail, and recording programming if it is a recording programming mail are repeated until the number "n-1" is judged to be "0".

FIG. 4 is a flow chart showing an example of distinction about whether a received mail is a recording programming mail or not.

If a received mail includes a line of character string starting with a character string "open", the apparatus judges the mail to be a recording programming mail (S101).

For example, if a mail M having a description "open, pass (name), 19991231, 2200, 2359, 8, S, A" has been received, it is regarded that the string "open" indicates that the mail is a recording programming mail, the string "pass" indicates a password or a preregistered user name, the string "19991231" indicates a recording date, being December 31, 1999, the string "2200, 2359" indicates that a recording start time is 22:00 and a recording end time is 23:59, the string "8, S, A" indicates a channel number 8 as a recording source, and an image quality SP (standard recording mode) and a sound quality DD1 (Dolby Digital 1) as a recording rate.

Since information defined by a 8-digit number may be a recording programming code called "G-code", it is judged whether the number string following the string "pass (name)" is a recording programming code or not (S102) .

If the number string is a recording programming code, first four digits thereof indicate a number which does not correspond to a year of the Christian Era, and thereby the string is judged a recording programming code (S102-Yes). If it is a recording programming code, the recording start date and time, the recording end date and time, and channel number (the user does not need to select the recording source, in the case of using a recording programming code) is obtained therefrom. Therefore, the recording rate is then read (S103), and they are additionally entered in the recording programming information table in the memory 105 (S104).

If the number string is not a recording programming code (S102-No), the recording start date and time, the recording end date and time, recording source and recording rate, which are necessary for a recording programming, are read from the mail M, and additionally entered in the recording programming information table of the memory 105 (S104).

As described above, according to the present invention, it is possible to perform a recording programming at any time by an E-mail, even under conditions where recording programming by using the apparatus main body or the remote control device is difficult.

Therefore, it is possible to set start and end of recording information under conditions where recording programming by using the apparatus main body or the remote control device is difficult, and prevent failing in recording information due to the user's being out without programming recording, etc.

## Claims

1. An information recording and playback apparatus which records or plays back information, **characterized by** comprising:
receive means (103) for receiving a recording programming mail from the outside, the recording programming mail containing programming contents; and
entering means (101) for entering a recording programming in accordance with the programming contents obtained by the receive means.

2. An information recording and playback apparatus according to claim 1, **characterized in that**
the receive means (103) receiving the recording programming mail through a network.

3. An information recording and playback apparatus according to claims 1 or 2, **characterized by** further comprising:
a notifying mechanism (151) which notifies the outside of contents of the recording programming mail captured by the receive means.

4. An information recording and playback apparatus **characterized by** comprising:
an information recording and playback section (111) which records information in a recording medium, and plays back information prerecorded in a recording medium;
a timer section (141) which operates the information recording and playback section at a predetermined operation starting time, and stops the information recording and playback section at a predetermined operation ending time;
a memory section (105) which holds operation information of the timer section;
a communications control section (103) which inputs and sets at least the operation starting time and the operation ending time in the timer section from the outside; and
entering means (101) for entering, in the memory section, a recording programming including at least the operation starting time and the operation ending time obtained through the communications control section.

5. An information recording and playback apparatus according to claim 4, **characterized in that**
the communications control section (103) receiving an instruction supplied in the form of a mail from the outside, and acquiring information corresponding to the operation starting time and the operation ending time of the timer section.

6. An information recording and playback apparatus according to claim 4, **characterized by** further comprising:
a notifying mechanism (151) which notifies the outside of contents of the mail captured by the communications control section.

7. An information recording and playback apparatus according to claims 5 or 6, **characterized in that**
the communications control section (103) capturing the mail through a network.

8. A method of controlling an information recording and playback apparatus, the method **characterized by** comprising:
receiving a mail from outside;
judging whether the received mail contains recording control information including at least an operation starting time and an operation ending time;
judging whether a recording programming is acceptable with the operating starting time and the operating ending time included in the mail judged to be a mail containing the recording control information; and
storing, in a memory section, the operation starting time and the operation ending time included in the recording control information contained in the mail whose recording programming has been judged acceptable, the operation starting time and the operation ending time serving as information used for controlling a timer section, the timer section operating and stopping an information recording and playback section at the operation starting time and the operation ending time, respectively.

9. A method according to claim 10, **characterized by** further comprising:
notifying that the recording programming corresponding to the recording control information contained in the mail is impossible, if the recording programming is impossible.
